# EUROPEAN PATENT SPECIFICATION

(11) **EP 1 630 457 B1**
(45) Date of publication and mention of the grant of the patent: **27.02.2013**
(21) Application number: 05255202.3
(22) Date of filing: 24.08.2005
(51) Int. Cl.: F16H 61/00, F16H 59/16

(54) **Hydraulic control device for automatic transmission**
Hydraulische Steuereinrichtung für ein automatisches Getriebe
Dispositif de commande hydraulique pour transmission automatique

(30) Priority: 25.08.2004 JP 2004244668
(43) Date of publication of application: 01.03.2006
(73) Proprietor: HONDA MOTOR CO., LTD., Tokyo 107-8556 (JP)
(72) Inventor: Niiyama, Tsunefumi c/o Kabushiki Kaisha Honda, Wako-shi, Saitama-ken 351-0193 (JP)
(74) Representative: Piésold, Alexander James

(56) References cited:
- CH-A5- 679 384
- GB-A- 1 308 859
- US-A- 2 562 710
- US-A- 3 416 393
- US-A- 3 568 442
- US-A- 4 608 031

## Description

The present invention relates to a hydraulic control device for an automatic transmission, as is known from GB 1 308 859 A.

Japanese Patent Publication No. 45-31207 discloses a control device for an automatic transmission having a torque converter wherein a stator reaction in the torque converter is mechanically detected and a line pressure in the automatic transmission is increased in a torque amplifying region of the torque converter. A starting clutch having a speed reducing mechanism is known in the art as described in Japanese Utility Model Registration No. 2595934. In this publication, however, a torque reaction force generated in the speed reducing mechanism is directly grounded to a case member, and a line pressure varying mechanism is not provided.

In the case that no line pressure varying mechanism is provided in an automatic transmission, the line pressure is set to a value such that a maximum input torque can be transmitted. Accordingly, an originally unnecessary line pressure is output even in a low-load region where the input torque is small, so that a load on an oil pump increases to cause a reduction in fuel economy.

It is therefore an object of the present invention to provide a hydraulic control device for an automatic transmission wherein a torque reaction force generated in a speed reducing mechanism included in a starting clutch is mechanically detected and a line pressure in the automatic transmission is variably controlled according to the torque reaction force detected above.

In accordance with an aspect of the present invention, there is provided a hydraulic control device for an automatic transmission for controlling a pressure control valve provided in a hydraulic circuit connected to a hydraulic pump to control a line pressure in the hydraulic circuit so that the pressure control valve is operated in its closing direction according to an increase in torque reaction force generated in a speed reducing mechanism provided between a starting clutch and the automatic transmission, thereby increasing the line pressure; the speed reducing mechanism being configured by a planetary gear mechanism including a ring gear adapted to be connected to an input side by engaging the starting clutch, a pinion gear meshing with the ring gear, a carrier carrying the pinion gear and connected to an input shaft of the automatic transmission, and a sun gear meshing with the pinion gear and rotatably mounted on the input shaft; an operating arm being fixed to a sun gear shaft unrotatably mounted on the sun gear; the operating arm being located so as to abut against a spring retainer for retaining a reaction spring in the pressure control valve; the line pressure being controlled so that when the torque reaction force acting on the sun gear is not greater than an initial set value for the reaction spring, the line pressure is maintained at a low pressure, whereas when the torque reaction force becomes greater than the initial set value, the line pressure is increased with an increase in the torque reaction force by operating the pressure control valve in its closing direction.

According to the present invention, line pressure control for the automatic transmission according to an input torque can be performed to thereby improve fuel economy and reduce noise and vibrations.

Certain preferred embodiments will now be described, by way of example only, with reference to the accompanying drawings, in which :
FIG. 1 is a longitudinal sectional view of an automatic transmission to which the present invention is applied;
FIG. 2 is a sectional view of a pressure control valve according to a preferred embodiment of the present invention with a part thereof being shown by a hydraulic circuit diagram;
FIG. 3 is an enlarged perspective view of a support member; and
FIG. 4 is a graph showing a line pressure characteristic by the pressure control valve.

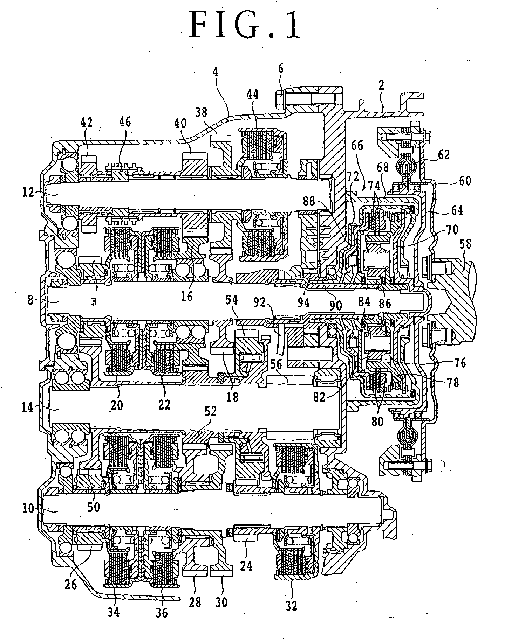

Referring to FIG. 1, there is shown a longitudinal sectional view of an automatic transmission including a hydraulic control device according to the present invention. A clutch case 2 and a transmission case 4 are integrated with each other by a plurality of bolts 6. There are arranged in the transmission case 4 a first input shaft (main shaft) 8, a second input shaft 10, a third input shaft 12, and an output shaft (counter shaft) 14. The shafts 8, 10, 12, and 14 extend parallel to each other.

A third-speed drive gear 3 and a sixth-speed drive gear 16 are rotatably mounted on the first input shaft 8, and a gear 18 is fixedly mounted on the first input shaft 8. The third-speed drive gear 3 is fixed to the first input shaft 8 by engaging a wet multiplate clutch 20. The sixth-speed drive gear 16 is fixed to the first input shaft 8 by engaging a wet multiplate clutch 22. A first-speed drive gear 24, a second-speed drive gear 26, and a fifth-speed drive gear 28 are rotatably mounted on the second input shaft 10, and a gear 30 is fixedly mounted on the second input shaft 10.

The first-speed drive gear 24 is fixed to the second input shaft 10 by engaging a wet multiplate clutch 32. The second-speed drive gear 26 is fixed to the second input shaft 10 by engaging a wet multiplate clutch 34. The fifth-speed drive gear 28 is fixed to the second input shaft 10 by engaging a wet multiplate clutch 36. A fourth-speed drive gear 38, a gear 40, and a reverse gear 42 are rotatably mounted on the third input shaft 12. The fourth-speed drive gear 38 is fixed to the third input shaft 12 by engaging a wet multiplate clutch 44. The gear 40 and the reverse gear 42 are selectively fixed to the third input shaft 12 by an axially movable synchronizing mechanism (F/R chamfer) 46.

Three driven gears 50, 52, and 54 and a final drive gear 56 are fixedly mounted on the output shaft 14. The driven gear 50 is in mesh with the second-speed drive gear 26 and the third-speed drive gear 3. The driven gear 52 is in mesh with the fifth-speed drive gear 28 and the sixth-speed drive gear 16. The driven gear 54 is in mesh with the first-speed drive gear 24. The final drive gear 56 is in mesh with a final driven gear (not shown).

Reference numeral 58 denotes a crankshaft of an engine (not shown). The crankshaft 58 is fixed to a drive plate 60 by screws. The drive plate 60 is connected through a torsional damper 62 to a driven plate 64. Reference numeral 66 denotes a starting clutch, which is accommodated in a clutch cover 68 mounted on the clutch case 2. The driven plate 64 is connected to an input plate 70 of the starting clutch 66. The input plate 70 is connected to a clutch outer 72 of the starting clutch 66 so as to be rotated together. A plurality of clutch plates 74 are mounted on the clutch outer 72 so as to be unrotatable and axially movable.

Reference numeral 76 denotes a planetary gear mechanism. A plurality of clutch discs 80 are mounted on a ring gear 78 of the planetary gear mechanism 76 so as to be unrotatable and axially movable. A pinion gear 82 carried by a carrier 84 is in mesh with the ring gear 78 and a sun gear 86. The carrier 84 is spline-connected to the first input shaft 8. The sun gear 86 is spline-connected to one end of a sun gear shaft 90 rotatably mounted on the first input shaft 8. An operating arm 92 for operating a pressure control valve to be hereinafter described is fixed to the other end of the sun gear shaft 90.

Reference numeral 88 denotes a piston. When a hydraulic fluid is supplied to the piston 88, the piston 88 is moved rightward as viewed in FIG. 1, so that the clutch plates 74 come into pressure contact with the clutch discs 80, thereby engaging the starting clutch 66. Reference numeral 94 denotes a hydraulic pump configured by a gear pump, which is driven by the rotation of the first input shaft 8. The hydraulic fluid from the hydraulic pump 94 is supplied to the wet multiplate clutches 20, 22, 32, 34, 36, and 44, thereby selectively engaging these clutches 20, 22, 32, 34, 36, and 44. The hydraulic fluid from the hydraulic pump 94 is supplied also to a hydraulic fluid chamber for the piston 88, thereby pushing the piston 88.

When the piston 88 is moved rightward as viewed in FIG. 1 by the hydraulic fluid supplied by the hydraulic pump 94 to thereby engage the starting clutch 66, the first input shaft 8 spline-connected to the carrier 84 of the planetary gear mechanism 76 is rotated at a predetermined reduction ratio by the planetary gear mechanism 76. The sun gear 86 is rotatably mounted on the first input shaft 8, and the operating arm 92 fixed to the sun gear shaft 90 is operatively connected to the pressure control valve. Accordingly, in the case that a torque reaction force acting on the sun gear 86 is not greater than an initial set value for a reaction spring provided in the pressure control valve, the sun gear 86 can be regarded as a fixed member.

Letting the sun gear 86 of the planetary gear mechanism 76 be regarded as a fixed member, the number of teeth of the ring gear 78 be represented by Z_{R}, the number of teeth of the sun gear 86 be represented by Z_{S}, and the input torque from the ring gear 78 be represented by Tin, the sun gear 86 receives a torque reaction force of Z_{S}/Z_{R} x Tin, and a torque of (1 + Z_{S}/Z_{R}) × Tin is output from the sun gear 86. Further, the rotational speed of the first input shaft 8 is reduced to Z_{R}/(Z_{S} + Z_{R}).

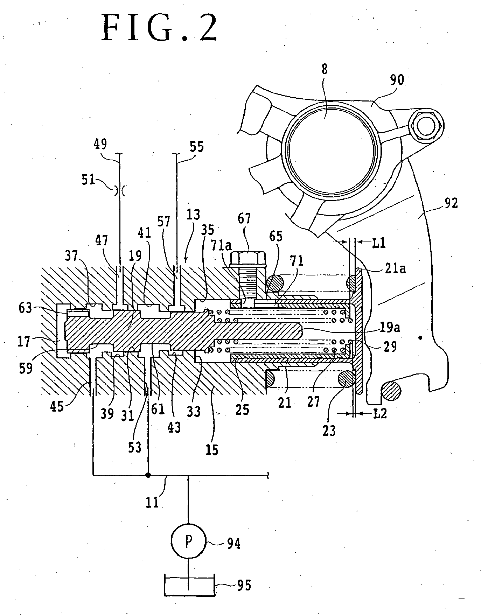

There will now be described a preferred embodiment of the hydraulic control device according to the present invention with reference to FIG. 2. A hydraulic fluid is raised from a fluid reservoir 95 by the hydraulic pump 94 as a gear pump, which is driven by the rotation of the first input shaft 8. A hydraulic circuit 11 is connected to a discharge opening of the hydraulic pump 94. The hydraulic circuit 11 is provided with a pressure control valve 13 for controlling a hydraulic pressure according to the torque reaction force acting on the sun gear 86 of the planetary gear mechanism 76. The hydraulic circuit 11 is connected to hydraulic fluid chambers for operating pistons respectively provided in the wet multiplate clutches 20, 22, 32, 34, 36, and 44.

The pressure control valve 13 includes a housing 15, a spool 19 slidably fitted in the housing 15 so that a pilot chamber 17 is defined between the front end of the spool 19 and the housing 15, an operating arm 92 adapted to be rotated from its initial position in association with an increase in torque reaction force acting on the sun gear 86 of the planetary gear mechanism 76, and a cylindrical spring retainer 21 slidably supported to the housing 15 so as to abut against the operating arm 92.

The pressure control valve 13 further includes a reaction spring 23 provided between the spring retainer 21 and the housing 15, a support member 25 fitted in the spring retainer 21 so that the movement relative to the spring retainer 21 is permitted within a limited range in the axial direction of the spool 19, a first pressure control spring 27 provided without play between the spool 19 and the support member 25, and a second pressure control spring 29 provided with play between the spool 19 and the spring retainer 21 in the initial position of the operating arm 92 where the spring retainer 21 abuts against the operating arm 92. The spring constant of the first pressure control spring 27 is set to a relatively small value, and the spring constant of the second pressure control spring 29 is set to a relatively large value.

The housing 15 is formed with a cylinder bore 31 closed at its front end and a sliding bore 35 coaxially connected at its front end through a shoulder 33 to the rear end of the cylinder bore 31. The sliding bore 35 has a diameter larger than that of the cylinder bore 31, and the rear end of the sliding bore 35 is open to slidably receive the spring retainer 21. The spool 19 is slidably fitted in the cylinder bore 31, and the pilot chamber 17 is formed between the closed end of the cylinder bore 31 and the spool 19. The inner circumferential surface of the cylinder bore 31 is formed with a first annular recess 37, a second annular recess 39, a third annular recess 41, and a fourth annular recess 43 arranged in this order from the front end toward the rear end of the cylinder bore 31 so as to be spaced in the axial direction of the cylinder bore 31.

The housing 15 is further formed with a first inlet port 45 for connecting the first annular recess 37 to the hydraulic circuit 11, an outlet port 47 for connecting the second annular recess 39 to a conduit 49 having a restriction 51, a second inlet port 53 for connecting the third annular recess 41 to the hydraulic circuit 11, and a drain port 57 for connecting the fourth annular recess 43 to an open conduit 55 leading to the fluid reservoir 95.

On the other hand, the outer circumferential surface of the spool 19 is formed with a first annular groove 59 always communicating with the first annular recess 37 and a second annular groove 61 always communicating with the third annular recess 41. Further, the spool 19 is formed with an axially extending passage 63 for connecting the first annular groove 59 to the pilot chamber 17. Accordingly, the hydraulic pressure in the hydraulic circuit 11 is applied through the first inlet port 45, the first annular recess 37, the first annular groove 59, and the passage 63 to the pilot chamber 17.

The first annular groove 59 is formed on the spool 19 at such a position that it connects the first and second annular recesses 37 and 39 in a retracted position (rear position) of the spool 19, whereas it disconnects the first and second annular recesses 37 and 39 in an advanced position (front position) of the spool 19. The second annular groove 61 is formed on the spool 19 at such a position that it connects the third and fourth annular recesses 41 and 43 in the retracted position of the spool 19, whereas it disconnects the third and fourth annular recesses 41 and 43 in the advanced position of the spool 19.

The spring retainer 21 is a cylindrical member having a closed end formed with a flange 21a projecting radially outwardly. The spring retainer 21 is slidably fitted in the sliding bore 35 of the housing 15 in such a manner that the closed end of the spring retainer 21 is located at a rear position. The operating arm 92 abuts against the outer surface of the closed end of the spring retainer 21, and the reaction spring 23 is provided between the flange 21a of the spring retainer 21 and the housing 15. In the condition where no torque reaction force acts on the sun gear 86 of the planetary gear mechanism 76, the operating arm 92 has an initial position shown in FIG. 2. With an increase in torque reaction force acting on the sun gear 86, the operating arm 92 advances so as to compress the reaction spring 23, so that the spring retainer 21 advances accordingly.

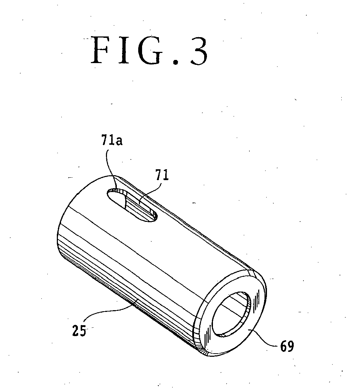

The cylindrical portion of the spring retainer 21 is formed with an axially extending elongated hole 65. A stopper 67 is threadedly engaged with the housing 15, and a front end of the stopper 67 is inserted in the elongated hole 65. Accordingly, rotation of the spring retainer 21 about its axis is inhibited by the stopper 67, and axial slide of the spring retainer 21 within a limited range defined by the length of the elongated hole 65 is permitted. The support member 25 is a cylindrical member slidably fitted in the spring retainer 21. As shown in FIG. 3, the rear end of the support member 25 is formed with a spring seat 69 projecting radially inwardly.

The cylindrical portion of the support member 25 is formed with an axially extending elongated hole 71 for insertion of the front end of the stopper 67. The front end of the elongated hole 71 functions as an inhibiting portion 71a for inhibiting rearward movement of the support member 25 by the abutment against the stopper 67. The rear end of the spool 19 is coaxially formed with a small-diameter shaft portion 19a extending rearwardly in such a manner that the shaft portion 19a is doubly surrounded by the first and second pressure control springs 27 and 29.

The first pressure control spring 27 is interposed without play between the spring seat 69 of the support member 25 and the rear end of the spool 19. In the initial position of the operating arm 92, the support member 25 has a retracted position where the inhibiting portion 71a of the support member 25 is brought into abutment against the stopper 67 by the spring force of the first pressure control spring 27. In this condition, there is defined a spacing L1 corresponding to an initial movable range of the operating arm 92 between the rear end of the support member 25 and the inner surface of the closed end of the spring retainer 21. The second pressure control spring 29 is interposed between the inner surface of the closed end of the spring retainer 21 and the rear end of the spool 19 so that a play L2 not greater than the spacing L1 is defined in the initial position of the operating arm 92. In other words, the second pressure control spring 29 has a natural length such that no spring force is exerted in the initial position of the operating arm 92.

The operation of the hydraulic control device according to the preferred embodiment will now be described. In the case that the torque reaction force acting on the sun gear 86 is not greater than the initial set value for the reaction spring 23, the operating arm 92 is at rest in the initial position shown in FIG. 2. In this condition, only the spring force of the first pressure control spring 27 having a relatively small spring constant acts on the spool 19. Accordingly, even when the discharge pressure of the hydraulic pump 94 varies a little, variations in the spring force of the first pressure control spring 27 acting on the spool 19 are small, so that the hydraulic pressure in the hydraulic circuit 11 is maintained at a substantially constant value.

When the torque reaction force acting on the sun gear 86 becomes greater than the initial set value for the reaction spring 23, the spring retainer 21 is moved leftward as viewed in FIG. 2 by the depression force of the operating arm 92 against the biasing force of the reaction spring 23. At the time the play L2 of the second pressure control spring 29 becomes zero, the second pressure control spring 29 starts to be compressed, thereby urging the spool 19 leftward as viewed in FIG. 2. That is, the increasing spring force of the second pressure control spring 29 gradually compressed by the spring retainer 21 is applied to the spool 19 in the leftward direction as viewed in FIG. 2, thereby increasing the hydraulic pressure in the hydraulic circuit 11.

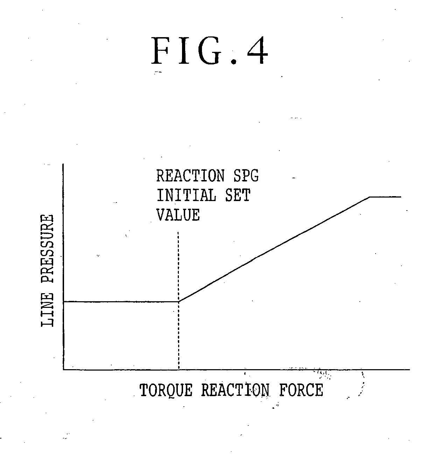

When the operating arm 92 is rotated clockwise as viewed in FIG. 2 to such a position that the closed end of the spring retainer 21 abuts against the rear end of the support member 25, or the spring seat 69, both the first and second pressure control springs 27 and 29 start to be compressed by the spring retainer 21. As a result, the spring load exerted on the spool 19 is further increased and the hydraulic pressure (line pressure) in the hydraulic circuit 11 is accordingly increased with an increase in the torque reaction force acting on the sun gear 86 as shown in FIG. 4.

## Claims

1. A hydraulic control device for an automatic transmission for controlling a pressure control valve (13) provided in a hydraulic circuit (11) connected to a hydraulic pump (94) to control a line pressure in said hydraulic circuit (11) so that said pressure control valve (13) is operated in its closing direction according to an increase in torque reaction force generated in a speed reducing mechanism provided between a starting clutch (66) and said automatic transmission, thereby increasing said line pressure, **characterised in that**
said speed reducing mechanism being configured by a planetary gear mechanism (76) comprising a ring gear (78) adapted to be connected to an input side by engaging said starting clutch (66), a pinion gear (82) meshing with said ring gear (78), a carrier (84) carrying said pinion gear (82) and connected to an input shaft (8) of said automatic transmission, and a sun gear (86) meshing with said pinion gear (82) and rotatably mounted on said input shaft (8) ;
an operating arm (92) being fixed to a sun gear shaft (90) unrotatably mounted on said sun gear (86);
said operating arm (92) being located so as to abut against a spring retainer (21) for retaining a reaction spring (23) in said pressure control valve (13);
said line pressure being controlled so that when said torque reaction force acting on said sun gear (86) is not greater than an initial set value for said reaction spring (23), said line pressure is maintained at a low pressure, whereas when said torque reaction force becomes greater than said initial set value, said line pressure is increased with an increase in said torque reaction force by operating said pressure control valve (13) in its closing direction.

## Patentansprüche

1. Hydrauliksteuervorrichtung für ein Automatikgetriebe zum Steuern eines Drucksteuerventils (13), das in einem mit einer Hydraulikpumpe (94) verbundenen Hydraulikkreislauf (11) vorgesehen ist, um einen Leitungsdruck in dem Hydraulikkreislauf (11) zu steuern, so dass das Drucksteuerventil (13) gemäß einem Anstieg der in einem zwischen einer Anfahrkupplung (66) und dem Automatikgetriebe vorgesehenen Drehzahlminderungsmechanismus erzeugten Drehmoment-Reaktionskraft in seiner Schließrichtung betätigt wird, wodurch der Leitungsdruck erhöht wird, **dadurch gekennzeichnet, dass**
der Drehzahlminderungsmechanismus durch einen Planetenradmechanismus (76) ausgebildet ist, der Folgendes umfasst:
ein Hohlrad (78), das dazu angepasst ist durch Einrücken der Anfahrkupplung (66) mit einer Eingangsseite verbunden zu werden, ein Ritzel (82), das mit dem Hohlrad (78) in Eingriff ist, einen Träger (84), der das Ritzel (82) trägt und mit einer Eingangswelle (8) des Automatikgetriebes verbunden ist, und ein Sonnenrad (86), das mit dem Ritzel (82) in Eingriff ist und drehbar auf der Eingangswelle (8) angebracht ist;
ein Betätigungsarm (92) an einer Sonnenradwelle (90) befestigt ist, die nicht drehbar an dem Sonnenrad (86) angebracht ist;
wobei der Betätigungsarm (92) derart positioniert ist, dass er an einem Federrückhalter (21) anstößt, um eine Reaktionsfeder (23) in dem Drucksteuerventil (13) zurückzuhalten;
wobei der Leitungsdruck derart gesteuert wird, dass, wenn die auf das Sonnenrad (86) wirkende Drehmoment-Reaktionskraft nicht größer ist als ein Anfangssollwert für die Reaktionsfeder (23), der Leitungsdruck auf einem niedrigen Druck gehalten wird, wohingegen, wenn die Drehmoment-Reaktionskraft größer wird als der Anfangssollwert, der Leitungsdruck mit einer Zunahme der Drehmoment-Reaktionskraft erhöht wird, indem das Drucksteuerventil (13) in seiner Schließrichtung betätigt wird.

## Revendications

1. Dispositif de commande hydraulique pour une transmission automatique permettant de commander une soupape de commande de pression (13) aménagée dans un circuit hydraulique (11) raccordé à une pompe hydraulique (94) pour commander une pression de conduite dans ledit circuit hydraulique (11) de telle sorte que ladite soupape de commande de pression (13) soit actionnée dans son sens de fermeture en fonction d'une augmentation de la force de réaction de couple générée dans un mécanisme réducteur de vitesse installé entre un embrayage de démarrage (66) et ladite transmission automatique, ce qui augmente ladite pression de conduite, **caractérisé en ce que** :
ledit mécanisme réducteur de vitesse est configuré par un mécanisme d'engrenage planétaire (76) comprenant une couronne planétaire (78) qui est à même d'être raccordée à un côté d'entrée en engageant ledit embrayage de démarrage (66), un pignon (82) en prise avec ladite couronne planétaire (78), une roue porteuse (84) portant ledit pignon (82) et raccordée à un arbre d'entrée (8) de ladite transmission automatique, et un train planétaire (86) en prise avec ledit pignon (82) et monté à rotation sur ledit arbre d'entrée (8) ;
un bras de fonctionnement (92) est fixé à un arbre de train planétaire (90) monté sans pouvoir tourner sur ledit train planétaire (86) ;
ledit bras de fonctionnement (92) étant situé de manière à s'appuyer contre un élément de retenue de ressort (21) pour retenir un ressort de réaction (23) dans ladite soupape de commande de pression (13) ;
ladite pression de conduite étant commandée de sorte que, lorsque ladite force de réaction de couple agissant sur ledit train solaire (86) n'est pas supérieure à une valeur de consigne initiale pour ledit ressort de réaction (23), ladite pression de conduite soit maintenue à une faible valeur, tandis que, lorsque ladite force de réaction de couple devient plus grande que ladite valeur de consigne initiale, ladite pression de conduite soit augmentée avec une augmentation de ladite force de réaction de couple en actionnant ladite soupape de commande de pression (13) dans son sens de fermeture.
